# NEUE EUROPÄISCHE PATENTSCHRIFT

(11) **EP 1 409 298 B2**
(45) Veröffentlichungstag und Bekanntmachung des Hinweises auf die Entscheidung über den Einspruch: **03.12.2008**
(45) Hinweis auf die Patenterteilung: 11.01.2006
(21) Anmeldenummer: 02754441.0
(22) Anmeldetag: 25.07.2002
(51) Int. Cl.: B60R 21/01

(54) **EINRICHTUNG UND VERFAHREN ZUR AUSLÖSUNG EINES INSASSENSCHUTZMITTELS IN EINEM KRAFTFAHRZEUG**
DEVICE AND METHOD FOR TRIGGERING A PASSENGER PROTECTION MEANS IN A MOTOR VEHICLE
DISPOSITIF ET PROCEDE POUR DECLENCHER UN MOYEN DE PROTECTION D'OCCUPANT D'UN VEHICULE AUTOMOBILE

(30) Priorität: 25.07.2001 DE 10136226; 25.07.2001 DE 10136224
(43) Veröffentlichungstag der Anmeldung: 21.04.2004
(73) Patentinhaber: Continental Automotive GmbH, 30165 Hannover (DE)
(72) Erfinder: TYROLLER, Tobias, 93049 Regensburg (DE); WINKLER, Gerd, 93049 Regensburg (DE)
(86) Internationale Anmeldenummer: PCT/DE2002/002740
(87) Internationale Veröffentlichungsnummer: WO 2003/011652

(56) Entgegenhaltungen:
- EP-A1- 0 982 199
- DE-A- 4 112 579
- DE-A- 10 129 945
- DE-A1- 4 322 488
- DE-A1- 10 008 237
- DE-A1- 19 645 079
- DE-C- 10 119 781
- DE-C1- 19 514 082
- US-A- 5 964 816

## Beschreibung

Die Erfindung betrifft eine Einrichtung und ein Verfahren zur Auslösung eines Insassenschutzmittels in einem Kraftfahrzeug mit einer zentralen Steuereinheit, in der eine zentrale Sensoreinheit angeordnet ist, und mit mindestens einer rohdatenübertragenden Sensoreinheit. Die zentrale Steuereinheit weist für je eine rohdatenübertragende Sensoreinheit eine Verknüpfungseinheit und eine Schwellwertvergleichereinheit auf, wobei das Signal der zentralen Sensoreinheit einem ersten Signaleingang der Verknüpfungseinheit zugeführt ist und das Signal der rohdatenübertragenden Sensoreinheit einem zweiten Signaleingang der Verknüpfungseinheit. Der Signalausgang der Verknüpfungseinheit ist mit der Schwellwertvergleichereinheit verbunden und der Signalausgang der Schwellwertvergleichereinheit ist mit der Auslöseeinheit des der jeweiligen Sensoreinheit zugeordneten Insassenschutzmittels verbunden, so dass die Auslöseeinheit das mit ihr verbundene Insassenschutzmittel dann auslöst, wenn der Signalausgang der Verknüpfungseinheit größer als ein Schwellwert der zugeordneten Schwellwertvergleichereinheit ist.

In vielen Anwendungsgebieten müssen innerhalb eines Kraftfahrzeugs Messsignale von Sensoreinheiten an eine zentrale Recheneinheit übertragen werden. Vor allem auf dem Gebiet des Schutzes von Insassen eines Kraftfahrzeugs werden die Signale von dezentralen Sensoreinheiten an die zentrale Steuereinheit des Kraftfahrzeuges übermittelt. Der bevorzugte Platz zur Anordnung solcher dezentraler Sensoreinheiten, den sogenannten Satelliteneinheiten, ist genau an den Stellen des Kraftfahrzeugs, an denen im Falle eines Aufprallunfalles das am besten auszuwertende Signal zu erwarten ist.

Beispielsweise werden Beschleunigungssensoreinheiten am sogenannten Schweller unterhalb des Fahrzeugsitzes eines Kraftfahrzeugs und in der Nähe der Kraftfahrzeugseitentür angebracht. Werden als Sensoreinheiten Drucksensoreinheiten verwendet, sogenannte Drucksatelliten, so sind diese in einem abgeschlossenen Hohlraum, bevorzugt in den Seitentüren, angeordnet.

Eine solche Drucksensoreinheit ist beispielsweise aus dem europäischen Patent EP 0 667 822 B1 bekannt. Dort wird eine Steuereinheit für ein Insassenschutzsystem beschrieben, bei der ein Drucksensor den adiabatischen Druckanstieg in der Seitentür eines Fahrzeugs während eines Aufprallunfalls erfasst; aufgrund des gemessenen Verlaufs der Luftdruckänderung wird ggf. ein Insassenschutzmittel angesteuert (dortige Spalte 2, Zeile 43 bis Spalte 3, Zeile 22).

Ebenfalls bekannt aus der Druckschrift EP 0 667 822 B1 ist die gleichzeitige Verwendung von mehreren, über das Fahrzeug verteilten Sensoreinheiten. Da mehr Sensoreinheiten auch mehr Informationen über einen Aufprallunfall erfassen können, kann beispielsweise die Auslöseentscheidung für zugeordnete Insassenschutzmittel gegebenenfalls besser an die Schwere und die Art des Unfalls angepasst werden (Spalte 3, Zeilen 23 bis 36).

Darüber hinaus kann durch die Verwendung mehrerer Sensoreinheiten auch bei solchen Aufprallereignissen des Kraftfahrzeugs eine geeignete Auslöseentscheidung für ein Insassenschutzmittel getroffen werden, bei der das Signal nur einer Sensoreinheit nicht genügend Sicherheit für eine richtige Auslöseentscheidung bietet. Beispielsweise werden durch eine geeignete Anordnung einer Beschleunigungssensoreinheit in der B-Säule eines Kraftfahrzeugs vorzugsweise Aufprallereignisse auf die starre Fahrzeugstruktur des Kraftfahrzeugs detektiert, wohingegen eine Drucksensoreinheit in der Fahrzeugtür vor allem Aufpralle auf die Fahrzeugtür erfassen kann. Werden nun der zentralen Steuereinheit die Signale beider Sensoreinheiten zugeführt, so kann die zentrale Steuereinheit auch Aufprallereignisse auf die starre Fahrzeugstruktur mit Hilfe der Auslöseentscheidung der Beschleunigungssensoreinheit detektieren, die bei alleiniger Verwendung einer Drucksensoreinheit nicht oder nur sehr spät detektierbar wären.

Neueste Entwicklungen auf dem Gebiet des Insassenschutzes in Kraftfahrzeugen verwenden sogenannte rohdatenübertragende Sensoreinheiten. In der rohdatenübertragenden Sensoreinheit erfolgt keine Auswertung der gemessenen Sensordaten wie dies bislang üblicherweise oft der Fall war. Die in der rohdatenübertragenden Sensoreinheit enthaltene Elektronik sorgt lediglich dafür, dass die gemessenen Daten auf geeignete Weise an eine zentrale Steuereinheit übermittelt werden können. Eine Auswertung der Sensorsignale erfolgt erst dort.

Eine solche rohdatenübertragende Sensoreinheit unter Verwendung eines Drucksensors als Messaufnehmer ist beispielsweise in der deutschen Offenlegungsschrift DE 101 29 945 A1 beschrieben.

Wie dort beschrieben, werden die gemessenen Sensorwerte durch die Elektronik der Sensoreinheit beispielsweise digitalisiert und als Sieben-Bit-Datenwort mit einer Übertragungsfrequenz von zwei Kilohertz an die zentrale Steuereinheit übermittelt.

Weiter oben wurde bereits beschrieben, dass zur Messung von Aufprallereignissen an einem Kraftfahrzeug mehrere Sensoreinheiten über das Kraftfahrzeug verteilt angeordnet sein können. Als solche verteilt angeordnete Sensoreinheiten können auch rohdatenübertragende Sensoreinheiten verwendet werden, beispielsweise Drucksensoreinheiten oder Beschleunigungssensoreinheiten.

Aus der Offenlegungsschrift WO 02/085675 A1 ist es bekannt, an den jeweils gegenüber liegenden Fahrzeugtüren Beschleunigungssensoren anzuordnen. Die beiden Beschleunigungssensoren nehmen die auf das Fahrzeug wirkenden Beschleunigungen quer zur Fahrzeugachse auf. In einer zentralen Steuereinheit wird der Betrag der Differenz der Beschleunigungswerte der beiden Beschleunigungssensoren gebildet. Abhängig von dem zeitlichen Verlauf und im Amplitudenverlauf der Differenz wird auf einen Seitenaufprall oder auf einen Fahrzeugüberschlag geschlossen.

Aufgabe der vorliegenden Erfindung ist es, eine verbesserte Auslöseentscheidung bei der Auslösung von Insassenschutzmitteln in einem Kraftfahrzeug bei der Verwendung von mindestens einer rohdatenübertragenden Sensoreinheit und einer zentral auswertenden zentralen Steuereinheit zu erreichen.

Die Aufgabe wird gelöst durch eine Einrichtung mit den Merkmalen des Patentanspruchs 1.

Die erfindungsgemäße Einrichtung dient zur Auslösung eines Insassenschutzmittels und umfasst eine zentrale Steuereinheit, der die Daten mindestens einer rohdatenübertragenden Sensoreinheit zugeführt werden. Die zentrale Steuereinheit weist eine vorzugsweise in der zentralen Steuereinheit integriert angeordnete zentrale Sensoreinheit auf. Die in der zentralen Steuereinheit angeordnete zentrale Sensoreinheit wird zumeist gebildet aus einem Beschleunigungssensor mit geeigneter elektronischer Beschaltung zur Aufbereitung des Sensorsignals für die weitere Auswertung des Sensorsignals in der zentralen Steuereinheit.

Des Weiteren weist die erfindungsgemäße Einrichtung mindestens eine rohdatenübertragende Sensoreinheit auf.

Die rohdatenübertragende Sensoreinheit ist im Gegensatz zur zentralen Sensoreinheit räumlich entfernt von der zentralen Steuereinheit so im Kraftfahrzeug angebracht, dass sie die bei einem Aufprallunfall auftretenden Krafteinwirkungen bestmöglich erfassen kann.

Geeignete rohdatenübertragende Sensoreinheiten sind beispielsweise Beschleunigungssensoreinheiten, die an Stellen des Kraftfahrzeugs angebracht sind, an denen eine sehr gute mechanische Kopplung mit der starren Fahrzeugstruktur eines Kraftfahrzeugs gewährleistet ist.

Eine weitere geeignete Sensoreinheit ist beispielsweise eine Drucksensoreinheit, die beispielsweise in einer Fahrzeugtür angeordnet ist, um den bei einem Aufprallunfall auftretenden Druckanstieg innerhalb der Fahrzeugtür zu erfassen.

Im Folgenden werden die rohdatenübertragenden Sensoreinheiten auch Satelliteneinheiten, Satelliten oder nur Sensoreinheiten genannt. Wenn sie Drucksensoren oder Beschleunigungssensoren aufweisen, werden sie darüber hinaus auch Beschleunigungssensoreinheiten oder Beschleunigungssatelliten beziehungsweise Drucksensoreinheiten oder Drucksatelliten genannt.

Die Signale der Satelliteneinheiten werden in der zentralen Steuereinheit durch eine geeignete Empfangseinheit aufgenommen. Erfindungsgemäß wird das Signal einer Satelliteneinheit allerdings einem Signaleingang einer Verknüpfungseinheit zugeführt, der eingangsseitig zugleich auch das Signal der zentralen Sensoreinheit zugeführt ist.

Der Ausgang der Verknüpfungseinheit ist mit einer Schwellwertvergleichereinheit verbunden. Der Ausgang der Schwellwertvergleichereinheit wiederum wird mittelbar oder unmittelbar einer Auslöseeinheit eines zugeordneten Insassenschutzmittels zugeführt. Die Auslöseeinheit kann dabei wie die zentrale Sensoreinheit ebenfalls in der ECU untergebracht sein.

Die beschriebenen Funktionseinheiten innerhalb der zentralen Steuereinheit dienen der Signalaufbereitung wie folgt:
Die Verknüpfungseinheit bewirkt eine geeignete Verknüpfung der Signale der Satelliteneinheit und der zentralen Sensoreinheit. Im einfachsten Falle wird durch die Verknüpfungseinheit ein Summensignal der Signale der zentralen Sensoreinheit und der Satelliteneinheit erzeugt. Am Signalausgang der Verknüpfungseinheit liegt deshalb für diesen Fall ein Summensignal dieser beiden Sensoreinheiten vor.
Dieses Summensignal wird durch die Schwellwertvergleichereinheit auf das Überschreiten oder Unterschreiten eines in der Schwellwertvergleichereinheit gespeicherten Schwellwerts geprüft.

Üblicherweise wird in einer derartigen Schwellwertvergleichereinheit das eingehende Signal gegen mehrere zeitlich veränderliche und gegebenenfalls signalabhängige Schwellwerte verglichen. Über- oder unterschreitet das der Schwellwertvergleichereinheit zugeführte Summensignal zumindest einen dieser Schwellwerte, so wird der Auslöseeinheit, die mit der Schwellwertvergleichereinheit verbunden ist, eine Auslöseentscheidung übermittelt. Die Auslöseeinheit gibt nun ihrerseits die Auslöseentscheidung der Schwellwertvergleichereinheit direkt an das Insassenschutzmittel weiter, so dass beispielsweise ein Airbag oder ein Gurtstraffer aktiviert wird.

Vorzugsweise umfasst die erfindungsgemäße Einrichtung mindestens drei Satelliteneinheiten, nämlich eine erste, eine zweite und eine dritte Satelliteneinheit mit entsprechend eingangsseitig damit verbundenen ersten, zweiten und dritten Verknüpfungseinheiten, deren Signalausgänge wiederum mit ersten, zweiten und dritten Schwellwertvergleichereinheiten verbunden sind.

Die zentrale Sensoreinheit ist ebenfalls mit jeder dieser Verknüpfungseinheiten verbunden, so dass als Signalausgang jeder Verknüpfungseinheit ein Summensignal aus den Signalen der zentralen Sensoreinheit und der jeweiligen Satelliteneinheit erzeugt wird.
Dieses verknüpfte Summensignal wird an die jeweilige Schwellwertvergleichereinheit weitergeleitet, in der jedes derart erzeugte Summensignal mit einem oder mehreren Schwellwerten der jeweiligen Schwellwertvergleichereinheiten verglichen wird. Liegen die Signalausgänge der Verknüpfungseinheiten über oder unter einem gewissen Schwellwert, so teilen die jeweiligen Schwellwertvergleichereinheiten dies den mit ihnen verbundenen Auslöseeinheiten für die zugeordneten Insassenschutzmittel als Auslöseentscheidung mit.

Vorzugsweise ist mindestens eine Satelliteneinheiten eine Beschleunigungssatelliteneinheit, in einer weiteren Ausführungsform ist mindestens eine Satelliteneinheiten ein Drucksatellit.

Eine weitere bevorzugte Ausführungsform der Erfindung besteht darin, dass die erste und die zweite Satelliteneinheit durch Drucksatelliten gebildet werden, die dritte Sensoreinheit hingegen durch einen Beschleunigungssatelliten.

Beispielsweise sind die beiden Drucksatelliteneinheiten jeweils in den beiden vorderen Seitentüren angeordnet, die Beschleunigungssensoreinheit ist hingegen unter der Fahrzeugrückbank im hinteren Fahrzeugteil mittig an einem starren Karosserieteil befestigt.

Auf diese Weise können durch die beiden vorderen Drucksensoreinheiten jeweils Aufprallereignisse detektiert werden, bei denen die vorderen Fahrzeugtüren eingedrückt werden. Sobald jedoch die starre Karosserie des Fahrzeugs durch ein aufprallendes Objekt beschleunigt wird, ohne dass eine der vorderen Fahrzeugtüren eingedrückt werden, so kann das durch die mit der Karosserie fest verbundenen hinteren Beschleunigungseinheit erfasst werden.

Durch das erfindungsgemäße jeweilige Auswerten eines Summensignals aus den beiden Drucksatelliteneinheiten mit dem Signal der zentralen Sensoreinheit und des Summensignals der hinteren Beschleunigungssensoreinheit mit dem Signal der zentralen Sensoreinheit wird darüber hinaus eine besonders effektive Detektion von Aufprallereignissen eine Kraftfahrzeuges ermöglicht:

Zum einen wird die üblicherweise sehr rasche Druckänderung bei der Deformation der Fahrzeugtüren durch die Drucksensoreinheiten erfasst. Durch die Verknüpfung der Signale der Drucksensoreinheiten mit der zentralen Sensoreinheit der zentralen Steuereinheit wird zum anderen ein Signal erzeugt, dass sowohl auf die rasche Deformation der Fahrzeugtüren in sehr schneller Weise anspricht als auch auf eine reine Beschleunigung der starren Fahrzeugstruktur.

Ein zumindest anfänglich rein beschleunigendes Aufprallereignis ist beispielsweise dann gegeben, wenn ein schmales Objekt, beispielsweise ein Baum, nur auf die B-Säule des Kraftfahrzeugs trifft. Bei einem solchen Aufprallereignis wird lediglich das Fahrzeug als Ganzes mit seiner Karosserie beschleunigt. Eine geringe Deformation der Seitentüre wird erst dann erzeugt, wenn das Aufprallereignis stark genug ist, um das komplette Fahrzeug zu verwinden und somit auch die Seitentür zu deformieren.

Wenn beispielsweise der Baum nur auf die Seitentür trifft, wird in erster Linie zunächst die Fahrzeugtüre so deformiert, das ein sehr rascher Druckanstieg in dem durch die Seitentür gebildeten Hohlraum entsteht. Dieser Druckanstieg wird durch eine in der Seitentür angebrachte Drucksensoreinheit sehr schnell erfasst. Die Beschleunigungssensoreinheit in der zentralen Steuereinheit detektiert dabei erst dann ein ausreichend hohes Signal, wenn der Baum nach der Deformation der Seitentür steife Karosserieteile erfasst und beschleunigt.

Der Vorteil einer gemeinsamen Auswertung eines verknüpften Signals aus dem Signal der Beschleunigungssensoreinheit und dem Signal einer Drucksensoreinheit in den Seitentüren des Kraftfahrzeugs besteht darin, dass ein geeignet gewählter Schwellwert für das verknüpfte Signal in der zugeordneten Schwellwertvergleichereinheit sowohl in einem zunächst rein beschleunigenden Aufprallunfall als auch in einem anfänglich zunächst rein deformierenden Aufprallunfall erreicht werden kann.

Da die Schwellwertvergleichereinheit mittelbar oder unmittelbar mit der Auslöseeinheit des zugeordneten Insassenschutzmittels, beispielsweise eines Seitenairbags verbunden ist, kann mit Hilfe eines verknüpften Signals einer Satelliteneinheit mit der zentralen Sensoreinheit die jeweils schnellste Auslösung des am besten für diese Art des Unfalls geeigneten Insassenschutzmittels herbeigeführt werden.

Das Signal der dritten Beschleunigungssensoreinheit, deren Signal in der ihr zugeordneten Verknüpfungseinheit ebenfalls mit dem Signal der zentralen Sensoreinheit verknüpft wird, können nun dazu benutzt werden, auf ähnliche Weise schnelle und sichere Auslöseentscheidungen eines Seitenairbags dann herbeizuführen, wenn vor allem starre Karosserieteile des hinteren Fahrzeugteils durch ein aufprallendes Objekt getroffen werden.

Die zentrale Sensoreinheit in der zentralen Steuereinheit wird bei einem solchen Aufprallunfall ebenfalls ein seitliches Beschleunigungssignal feststellen können, da auch die zentrale Sensoreinheit bzw. die sie umgebende zentrale Steuereinheit fest mit der Fahrzeugkarosserie verbunden sind. Eine Verknüpfung der beiden Beschleunigungssignale der zentralen Sensoreinheit und des hinteren Beschleunigungssatelliten führt daher zu einem verstärkten Beschleunigungssignal, das deshalb zu einer sichereren, deutlichen und schnellen Überschreitung des Schwellwerts in der zugeordneten Schwellwertvergleichereinheit und deshalb auch im Falle eines hinteren Aufprallunfalls führt.

Vorteilhafterweise ist die dritte Verknüpfungseinheit der dritten Sensoreinheit ausgangsseitig gleichzeitig mit der dritten Schwellwertvergleichereinheit und einer vierten Schwellwertvergleichereinheit verbunden, wobei der Signalausgang der dritten Schwellwertvergleichereinheit mit der ersten Auslöseeinheit verbunden ist, jedoch der Signalausgang der vierten Schwellwertvergleichereinheit mit der zweiten Auslöseeinheit. Dies ermöglicht die Ansteuerung verschiedener Insassenschutzmittel, sobald durch die Schwellwertvergleichereinheiten ein Über- oder Unterschreiten des zugeordneten Schwellwerts feststellt wird.

Beispielsweise kann die dritte Beschleunigungssensoreinheit sowohl positive als auch negative Beschleunigungen senkrecht zur Fahrtrichtung des Kraftfahrzeugs erfassen. Vorteilhafterweise übermittelt die dritte Schwellwertvergleichereinheit folglich das Überschreiten und die vierte Schwellwertvergleichereinheit das Unterschreiten eines Schwellwerts als Auslösekriterium zur Auslösung eines Seitenairbags für die eine Fahrzeugseite bzw. die andere Fahrzeugseite.

Vorzugsweise werden die Signalausgänge der dritten und er vierten Schwellwertvergleichereinheiten, die das Summensignal aus den Signalen der hinteren Beschleunigungssensoreinheit und der zentralen Sensoreinheit bewerten, durch ein ODER-Gatter mit den Signalausgängen der Schwellwertvergleichereinheiten zusammengeführt, die der gleichen Auslöseeinheit eines Insassenschutzmittels zugeordnet sind. So führt beispielsweise ein Summensignal der zentralen Sensoreinheit und der hinteren Beschleunigungssensoreinheit oder das Summensignal der vorderen Drucksensoreinheit und der zentralen Sensoreinheit, die beide beispielsweise der Auslöseeinheit für einen linken Seitenairbag zugeordnet sind, unabhängig voneinander zu einer Auslöseentscheidung des linken Seitenairbags.

Es sind zwischen den Schwellwertvergleichereinheiten und den Auslöseeinheiten UND-Gatter angeordnet, so dass die Signalausgänge der Schwellwertvergleichereinheiten jeweils den Signaleingängen der UND-Gatter zugeführt sind. Einem oder mehreren weiteren Signaleingängen der UND-Gatter sind die Signalausgänge jeweils zugeordneter Safing-Einheiten zugeführt. Nur wenn gleichzeitig Signale der Schwellwertvergleichereinheiten und der Safing-Einheiten am UND-Gatter vorliegen, so wird die Auslöseentscheidung der Schwellwertvergleichereinheiten am Signalausgang der jeweiligen UND-Gatter ausgegeben und damit der jeweils angeschlossenen Auslöseeinheit ein Befehl zur Auslösung eines geeigneten Insassenschutzmittels weitergegeben.

Als Signalausgänge der Safing-Einheiten werden die Ergebnisse weiterer Auswertungen der zugeführten Sensordaten der Satelliteneinheiten und der zentralen Sensoreinheit verwendet, die die Plausibilität der Signale überprüfen sollen.

Im einfachsten Fall überprüft die Safingeinheit, ob die der zentralen Steuerreinheit vorliegenden einzelnen Signale der Sensoreinheiten alleine schon über einem vergleichsweise geringen Schwellwert liegen.

Beispielsweise kann die einer linken Beschleunigungssensoreinheit zugeordnete Safing-Einheit als Plausibilitätstest aber auch überprüfen, ob gleichzeitig zu den Sensordaten der linken Beschleunigungssensoreinheit auch passende, aber vorzeichenvertauschte Daten der rechten Beschleunigungssensoreinheit vorliegen oder umgekehrt. Gegebenenfalls kann eine Safing-Einheit auch überprüfen, ob zu einer im Heck des Kraftfahrzeugs angeordneten Beschleunigungssensoreinheit gleichzeitig ein plausibles Signal auch in der zentralen Sensoreinheit erzeugt wird.

Weiterhin kann die Safingeinheit durch Differenzbildung der Sensorwerte aus der zentralen Sensoreinheit und einer im Fahrzeugheck angebrachten Beschleunigungssensoreinheit die Richtung bestimmen, aus der ein aufprallendes Objekt auf ein Fahrzeugheck oder auf die vordere seitliche Fahrzeughälfte auftrifft.

Auch ein solches in der Safingeinheit erzeugtes Differenzsignal kann zur Überprüfung der Richtigkeit beispielsweise des Summensignals aus dem Signal der im Fahrzeugheck angebrachten Satelliteneinheit und der zentralen Sensoreinheit verwendet werden. Dazu wird das Differenzsignal, beispielsweise in der Safingeinheit, gegen einen geeigneten Schwellwert verglichen. Anschließend wird es wie die bereits beschriebenen anderen möglichen plausibilisierenden Signale einer Safingeinheit dem Signaleingang der UND - Einheit zugeführt, die mit der im Fahrzeugheck angebrachten Beschleunigungssensoreinheit verbunden ist.

Ein geeignetes Verfahren zur Auslösung eines Insassenschutzmittels in einem Kraftfahrzeug unter Verwendung der erfindungsgemäßen Einrichtung läuft wie folgt ab:

Eine Verknüpfungseinheit gibt ein aus dem Signal der zentralen Sensoreinheit und dem Signal einer rohdatenübertragenden Sensoreinheit verknüpftes Signal an eine Schwellwertvergleichereinheit weiter, in der dieses verknüpfte Signal mit einem Schwellwert verglichen wird. Die Auslöseentscheidung eines Insassenschutzmittels wird nur dann von der Schwellwertvergleichereinheit an eine zugeordnete Auslöseeinheit gegeben, wenn ein der Schwellwert unterschritten oder überschritten wird.

Vorzugsweise wird das Signal jeder Schwellwertvergleichereinheit zunächst einem UND-Gatter zugeführt. Einem weiteren Eingang des UND-Gatters wird das Ausgangssignal einer zugeordneten Safing-Einheit zugeführt, so dass die Auslöseentscheidung der Schwellwertvergleichereinheit nur dann einer Auslöseeinheit eines Insassenschutzmittels übermittelt wird, wenn sowohl ein dazu geeignetes Signal von der Schwellwertvergleichereinheit als auch von der zugeordneten Safing-Einheit am UND-Gatter eingangsseitig anliegt.

Vorzugsweise werden die Auslöseentscheidungen verschiedener Schwellwertvergleichereinheiten über ein ODER-Gatter so miteinander verbunden, dass die den beiden Schwellwertvergleichereinheiten zugeordnete Auslöseeinheit ein Insassenschutzmittel nur dann auslösen kann, wenn entweder die eine oder die andere der mindestens zwei dem ODER-Gatter zugeführten Schwellwertvergleichereinheiten dem ODER-Gatter eine Auslöseentscheidung übermittelt.

Im Folgenden wird die Erfindung anhand von drei Ausführungsbeispielen beschrieben.
Es zeigen:
- Figur 1: eine erfindungsgemäße Einrichtung mit einer rohdatenübertragenden Sensoreinheit (S1) und einer Auslöseentscheidungseinheit (AE1),
- Figur 2: eine erfindungsgemäße mit zwei rohdatenübertragenden Sensoreinheiten (S1, S2) und zwei Auslöseeinheiten (AE1, AE2) und
- Figur 3: eine erfindungsgemäße Einrichtung mit drei rohdatenübertragenden Sensoreinheiten (S1, S2, S3) und zwei Auslöseeinheiten (AE1, AE2).

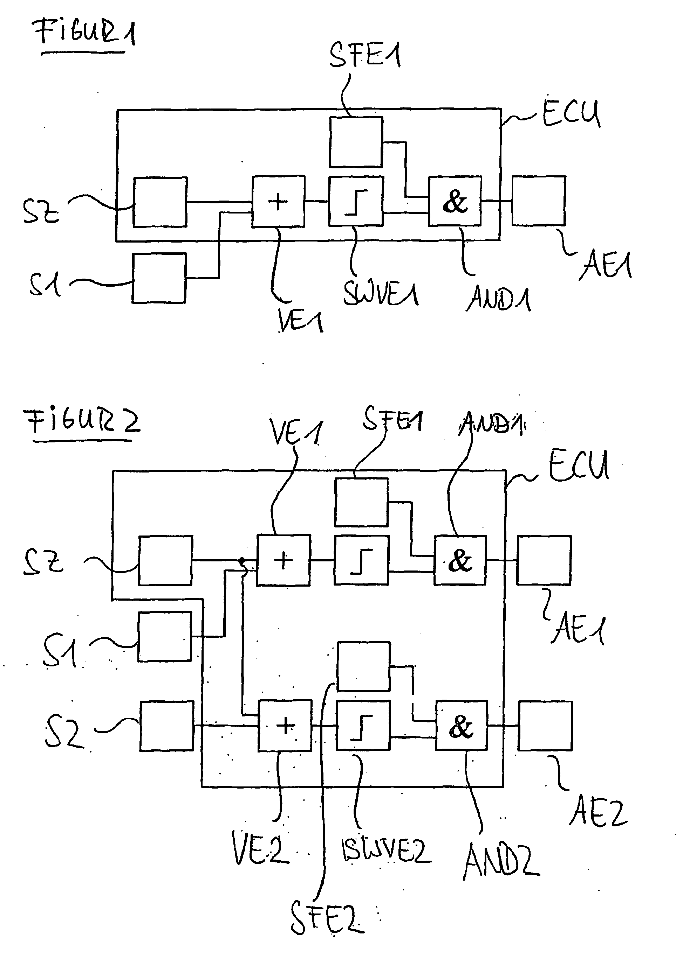

Figur 1 zeigt eine zentrale Steuereinheit (ECU) mit einer zentralen Sensoreinheit (SZ), einer Verknüpfungseinehit (VE1), einer Schwellwertvergleichereinheit (SWVW1), einem UND-Gatter (AND1) und einer Safing-Einheit (SFE1). Des Weiteren sind eine Sensoreinheit (S1) und eine Auslöseeinheit (AE1) dargestellt.

Die Signale der zentralen Sensoreinheit (SZ) und der rohdatenübertragenden dezentralen Sensoreinheit (S1) sind dem Eingang der Verknüpfungseinheit (VE1) zugeführt. Der Ausgang der Verknüpfungseinheit (VE1) ist dem Eingang der Schwellwertvergleichereinheit (SWVW1) zugeführt. Der Ausgang der Schwellwertvergleichereinheit (SWVW1) ist dem Eingang des UND-Gatters (AND1) zugeführt. Gleichzeitig ist dem UND-Gatter (AND1) der Signalausgang der Safing-Einheit (SFE1) zugeführt. Der Signalausgang des UND-Gatters (AND1) ist dem Signaleingang der Auslöseeinheit 1 zugeführt.

Die Verknüpfungseinheit (VE1) bildet ein Summensignal der Signale der zentralen Sensoreinheit (SZ) und der rohdatenübertragenden Sensoreinheit (S1). Nur wenn ein geeigneter Schwellwert in der Schwellwertvergleichereinheit (SWVW1) überschritten wird und gleichzeitig eine geeignete Safing-Bedingung der Safing-Einheit (SFE1) dem UND-Gatter (AND1) zugeführt wird, wird eine Auslöseentscheidung für das Insassenschutzmittel an die Auslöseeinheit (AE1) übermittelt. Die Auslöseeinheit (AE1) zündet daraufhin ein ihr zugeordnetes Insassenschutzmittel, beispielsweise einen Seitenairbag oder auch einen Gurtstraffer.

Figur 2 stellt im wesentlichen die Einrichtung der Figur 1 dar, wobei die Einrichtung eine zweite Sensoreinheit (S2), eine weitere Auslöseeinheit (AE2) und entsprechend zu diesen Einheiten eine zweite Verknüpfungseinheit (VE2), ein zweites UND-Gatter (AND2), eine zweite Safing-Einheit (SFE2) und eine zweite Auslöseeinheit (AE2).

Der Signalverlauf und die Funktionsweise der dargestellten Funktionseinheiten im Signalverlauf der zweiten Sensoreinheit (S2) bis zur zweiten Auslöseeinheit (AE2) ist analog zu der in Figur 1 gezeigten Einrichtung und soll deshalb hier nicht weiter erläutert werden.

Die gezeigte erste Sensoreinheit (S1) stellt beispielsweiseeinen Beschleunigungs- oder Drucksatelliten in der linken Fahrzeughälfte eines Kraftfahrzeugs dar, die zweite Sensoreinheit (S2) einen Beschleunigungs- oder Drucksatelliten in der rechten Fahrzeughälfte. Entsprechend bewirkt die erste Auslöseeinheit (AE1) bzw. die zweite Auslöseeinheit (AE2) die Auslösung eines linken bzw. rechten Seitenairbags oder auch eines linken bzw. rechten Gurtstraffers.

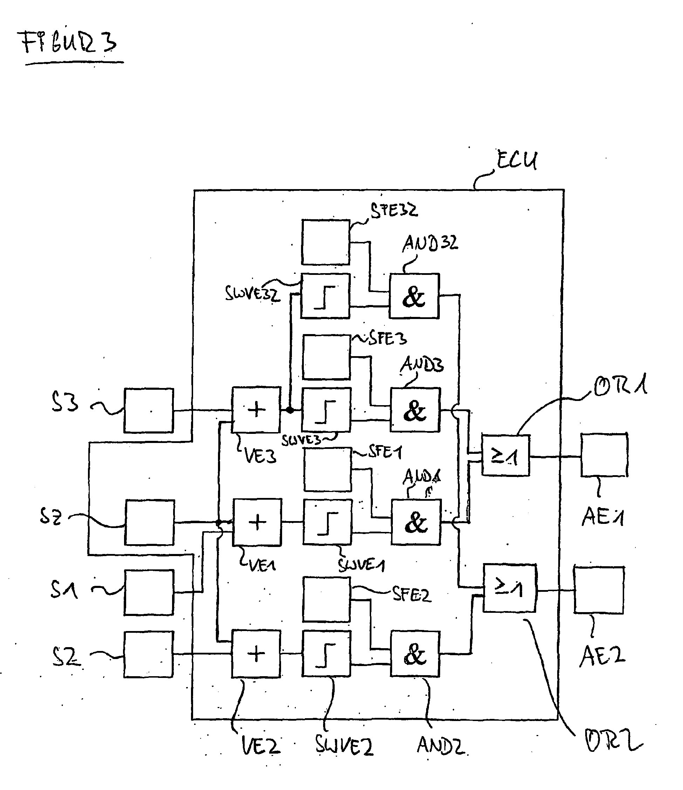

Figur 3 zeigt eine erfindungsgemäße Einrichtung, die im Gegensatz zu der in Figur 2 gezeigten Einrichtung eine dritte Sensoreinheit (S3) und, ihr zugeordnet, eine dritte Verknüpfungseinheit (VE3), eine dritte Schwellwertvergleichereinheit (SWVE3) und ein drittes UND-Gatter (AND3) aufweist. Weiterhin weist die in Figur 3 dargestellte Einrichtung eine vierte Schwellwertvergleichereinheit (SWVE32), ein viertes UND-Gatter (AND32) und eine vierte Safing-Einheit (SFE32) auf. Das Summensignal am Signalausgang der dritten Verknüpfungseinheit (VE3) ist der vierten Schwellwertvergleichereinheit (SWVE32) zugeführt. Der Signalausgang dieser vierten Schwellwertvergleichereinheit (SWVE32) ist einem Eingang des vierten UND-Gatters (AND32) zugeführt. Ein weiterer Eingang des vierten UND-Gatters (AND32) ist mit dem Signalausgang der vierten Safing-Einheit (SFE32) verbunden.

Die gezeigte dritte Sensoreinheit (S3) ist beispielsweise eine Beschleunigungssensoreinheit, die im Heck eines Kraftfahrzeuges angebracht ist und die beschleunigungsempfindlich in beide Richtungen senkrecht zur Fahrtrichtung des Kraftfahrzeugs ist.

Das Summensignal am Signalausgang der dritten Verknüpfungseinheit (VE3) wird in der dritten Schwellwertvergleichereinheit (SWVE3) gegen einen Schwellwert verglichen, dessen Überschreiten gegebenenfalls die Auslösung eines linken Seitenairbags zur Folge hat.

Das gleiche Summensignal am Signalausgang der dritten Verknüpfungseinheit (VE3) wird in der vierten Schwellwertvergleichereinheit (SWVE32) mit einem Schwellwert verglichen, dessen Überschreiten bzw. Unterschreiten gegebenenfalls die Auslösung eines rechten Seitenairbags zur Folge hat.

Liegt folglich am Signaleingang des dritten UND-Gatters (AND3) ein Auslösesignal der dritten Schwellwertvergleichereinheit (SWVE3) gleichzeitig mit einem plausibilisierenden Signal aus der dritten Safing-Einheit vor, so wird das Signal weitergeleitet an das erste ODER-Gatter (OR1) und von dort an die erste Auslöseeinheit (AE1). Die erste Auslöseeinheit (AE1) löst dadurch einen linken Seitenairbag aus.
Wie bereits anhand von Figur 2 beschrieben wurde, kann auch eine Auslöseentscheidung vom ersten UND-Gatter (AND1) über die erste ODER-Einheit (OR1) zur ersten Auslöseeinheit (AE1) erfolgen, wodurch ebenfalls die Auslösung des linken Seitenairbags bewirkt wird.

In gleicher Weise bewirkt eine Auslöseentscheidung am Signalausgang der vierten UND-Einheit (AND32) oder der zweiten UND-Einheit (AND2), die beide jeweils über die zweite ODER-Einheit (OR2) mit der zweiten Auslöseeinheit (AE2) verbunden sind zu einer Auslösung des rechten Seitenairbags.

Die Funktionseinheiten der erfindungsgemäßen Einrichtung und der erfindungsgemäße Ablauf des zugehörigen Verfahrens können zumindest teilweise auch innerhalb einer Recheneinheit ausgeführt sein.

## Patentansprüche

1. Einrichtung zur Auslösung eines Insassenschutzmittels in einem Kraftfahrzeug
- mit einer zentralen Steuereinheit (ECU), die eine zentrale Sensoreinheit (SZ) aufweist, und
- mit mindestens einer rohdatenübertragenden Sensoreinheit (S1; S2; S3), deren Signal für einen Vergleich mit einem zugehörigen Schwellwert herangezogen wird und das Ergebnis
- dieses Vergleichs als Auslösekriterium für die Auslösung
des Insassenschutzmittels dient,
wobei für je eine rohdatenübertragende Sensoreinheit (S1; S2; S3)
- die zentrale Steuereinheit (ECU) eine Verknüpfungseinheit (VE1; VE2; VE3) und eine Schwellwertvergleichereinheit
(SWVE1; SWVE2; SWVE3, SWVE32) aufweist,
- das Signal der zentralen Sensoreinheit (SZ) einem ersten Signaleingang der Verknüpfungseinheit (VE1; VE2; VE3) zugeführt ist,
- das Signal der Sensoreinheit (S1; S2; S3) einem zweiten Signaleingang der Verknüpfungseinheit (VE1; VE2; VE3) zugeführt ist,
- der Signalausgang der Verknüpfungseinheit (VE1; VE2; VE3) mit der Schwellwertvergleichereinheit (SWVE1; SWVE2; SWVE3, SWVE32) verbunden ist und
- der Signalausgang der Schwellwertvergleichereinheit (SWVE1; SWVE2; SWVE3, SWVE32) mit der Auslöseeinheit (AE1; AE2) des der jeweiligen Sensoreinheit (S1, S2, S3) zugeordneten Insassenschutzmittels verbunden ist,
so dass die Auslöseeinheit (AE1; AE2) das mit ihr verbundene Insassenschutzmittel dann auslöst, wenn der Signalausgang der Verknüpfungseinheit (VE1; VE2; VE3) größer oder kleiner als ein Schwellwert der zugeordneten Schwellwertvergleichereinheit (SWVE1; SWVE2; SWVE3, SWVE32) ist,
wobei
die Einrichtung für je eine Schwellwertvergleichereinheit (SWVE1; SWVE2; SWVE3, SWVE32) ein UND - Gatter (AND1; AND2; AND3, AND32) und mindestens eine Safingeinheit (SFE1; SFE2; SFE3, SFE32) aufweist, wobei das UND - Gatter
- eingangsseitig unmittelbar über eine Leitung mit dem Signalausgang der Schwellwertvergleichereinheit (SWVE1; SWVE2 ; SWVE3, SWVE32) verbunden ist,
- des Weiteren eingangsseitig mindestens mit der Safingeinheit (SFE1; SFE2; SFE3, SFE32) verbunden ist und
- das UND - Gatter ausgangsseitig mittelbar oder unmittelbar mit der jeweils zugeordneten Auslöseeinheit (AE1; AE2) verbunden ist,
so dass eine Auslösung eines Insassenschutzmittels durch die zugeordnete Auslöseeinheit (AE1; AE2) nur dann erfolgen kann, wenn der Signalausgang der zugeordneten Verknüpfungseinheit (VE1; VE2; VE3; VE32) größer oder kleiner als ein Schwellwert der zugeordneten Schwellwertvergleichereinheit (SWVE1; SWVE2; SWVE3, SWVE32) ist und gleichzeitig eine weiteres Signal der Safingeinheit (SFE1; SFE2; SFE3, SFE32) vorliegt.

2. Einrichtung nach Anspruch 1, **dadurch gekennzeichnet, dass**
bei der die zentrale Sensoreinheit (SZ) eine Beschleunigungssensoreinheit (SZ) ist, mit einer Sensierungsempfindlichkeit senkrecht zur Fahrtrichtung des Kraftfahrzeuges.

3. Einrichtung nach Anspruch 1 oder 2, **dadurch** g**ekennzeichnet, dass**
die Einrichtung mindestens drei Sensoreinheiten aufweist, und zwar
- eine erste Sensoreinheit (B1), die mit einer ersten Verknüpfungseinheit (VE1), einer ersten Schwellwertvergleichereinheit (SWV1) und einer ersten Auslöseeinheit (AE1) verbunden ist,
- eine zweite Sensoreinheit (S2), die mit einer zweiten Verknüpfungseinheit (VE2), einer zweiten Schwellwertvergleichereinheit (SWV2) und einer zweiten Auslöseeinheit (AE1) verbunden ist und
- eine dritte Sensoreinheit (S2), die mit einer dritten Verknüpfungseinheit (VE3), einer dritten Schwellwertvergleichereinheit (SWV3), der ersten Auslöseeinheit (AE1) und/oder der zweiten Auslöseeinheit (AE2) verbunden ist.

4. Einrichtung nach einem der Ansprüche 1 bis 3, **dadurch gekennzeichnet, dass**
mindestens eine Sensoreinheit (S1; S2; S3) eine Beschleunigungssensoreinheit ist, mit einer Sensierungsempfindlichkeit senkrecht zur Fahrtrichtung des Kraftfahrzeuges.

5. Einrichtung nach einem der Ansprüche 1 bis 4, **dadurch gekennzeichnet, dass**
mindestens eine Sensoreinheit (S1; S2; S3) eine Drucksensoreinheit ist.

6. Einrichtung nach den Ansprüchen 3 bis 5, **dadurch gekennzeichnet, dass**
die erste und die zweite Sensoreinheit (S1, S2) jeweils Drucksensoreinheiten sind, die dritte Sensoreinheit (S3) hingegen eine Beschleunigungssensoreinheit.

7. Einrichtung nach einem der Ansprüche 3 bis 6, **dadurch gekennzeichnet, dass**
die Einrichtung eine vierte Schwellwertvergleichereinheit (SWVE32) aufweist,
die eingangsseitig mit der dritten Verknüpfungseinheit (VE3) verbunden ist und die ausgangsseitig mit
der ersten oder der zweiten Auslöseeinheit (AE1, AE2) verbunden ist,
so dass die erste oder die zweite Auslöseeinheit (AE1, AE2) das mit ihr jeweils verbundene Insassenschutzmittel dann auslöst, wenn der Signalausgang der dritten Verknüpfungseinheit (VE3) größer oder kleiner als ein Schwellwert der vierten Schwellwertvergleichereinheit (SVE4) ist.

8. Einrichtung nach einem der Ansprüche 3 bis 7, **dadurch gekennzeichnet, dass**
die Einrichtung ein erstes ODER - Gatter (OR1) aufweist,
- dessen Signaleingänge mit den Signalausgängen der ersten Schwellwertvergleichereinheit (SWVE1) und der dritten Schwellwertvergleichereinheit (SWVE3) verbunden sind und
- dessen Signalausgang mit der ersten Auslöseeinheit (AE1) verbunden ist.

9. Einrichtung nach einem der Ansprüche 3 bis 8, **dadurch gekennzeichnet, dass**
die Einrichtung ein zweites ODER - Gatter (OR2) aufweist,
- dessen Signaleingänge mit den Signalausgängen der zweiten Schwellwertvergleichereinheit (SWVE2) und der vierten Schwellwertvergleichereinheit (SWVE4) verbunden sind und
- dessen Signalausgang mit der zweiten Auslöseeinheit (AE2) verbunden ist.

## Claims

1. Device for triggering an occupant protection means in a motor vehicle
- with a central control unit (ECU), which features a central sensor unit (SZ) and
- with at least one sensor unit (S1; S2; S3) transmitting raw data, of which the signal is included for comparison with an associated threshold value and the result of this comparison serves as a trigger criterion for the triggering of the occupant protection means,
with, for each sensor unit (S1; S2; S3) transmitting raw data
- the central control unit (ECU) having a logic unit (VE1; VE2; VE3) and a threshold value comparison unit (SWVE1; SWVE2; SWVE3, SWVE32),
- the signal of the central sensor unit (SZ) being fed to a first signal input of the logic unit (VE1; VE2; VE3),
- the signal of the sensor unit (S1; S2; S3) being fed to a second signal input of the logic unit (VE1; VE2; VE3),
- the signal output of the logic unit (VE1; VE2; VE3) is connected to the threshold value comparator unit (SWVE1; SWVE2; SWVE3, SWVE32) and
- the signal output of the threshold value comparator unit (SWVE1; SWVE2; SWVE3, SWVE32) being connected to the trigger unit (AE1; AE2) of the respective occupant protection means assigned to the sensor unit (S1, S2, S3), so that the trigger unit (AE1; AE2) triggers the occupant protection means connected to it if the signal output of the logic unit (VE1; VE2; VE3) is greater than or less than a threshold value of the assigned threshold value comparator unit (SWVE1; SWVE2; SWVE3, SWVE32).
with,
For each threshold value comparator unit (SWVE1; SWVE2; SWVE3, SWVE32) the device having an AND gate (AND1; AND2; AND3, AND32) and at least one safing unit (SFE1; SFE2; SFE3, SFE32), with the AND gate
- being connected directly on its input side via a line to the signal output of the threshold value comparator unit (SWVE1; SWVE2; SWVE3, SWVE32),
- being furthermore connected on its input side at least to the safing unit (SFE1; SFE2; SFE3, SFE32) and
- the AND gate being connected indirectly or directly on the output side to the respective assigned trigger unit (AE1; AE2),
so that a triggering of an occupant protection means by the assigned trigger unit (AE1; AE2) can only take place if the signal output of the assigned logic unit (VE1; VE2; VE3; VE32) is greater than or less than a threshold value of the assigned threshold value comparator unit (SWVE1; SWVE2; SWVE3, SWVE32) and simultaneously a further signal of the safing unit (SFE1; SFE2; SFE3, SFE32) is present.

2. Device in accordance with claim 1, **characterised in that**, the central sensor unit (SZ) is an acceleration sensor unit (SZ), with a sensing sensitivity at right angles to the direction of travel of the motor vehicle.

3. Device in accordance with claim 1 or 2, **characterised in that**,
the device features at least three sensor units, namely
- a first sensor unit (S1), which is connected to a first logic unit (VE1), a first threshold value comparator unit (SWV1) and a first trigger unit (AE1),
- a second sensor unit (S2), which is connected to a second logic unit (VE2), a second threshold value comparator unit (SWV2) and a second trigger unit (AE2) and
- a third sensor unit (S2), which is connected to a third logic unit (VE3), a third threshold value comparator unit (SWV3), the first trigger unit (AE1) and/or the second trigger unit (AE2).

4. Device in accordance with one of the claims 1 to 3,
**characterised in that**,
at least one sensor unit (S1; S2; S3) is an acceleration sensor unit, with a sensing sensitivity at right angles to the direction of travel of the motor vehicle.

5. Device in accordance with one of the claims 1 to 4,
**characterised in that**,
at least one sensor unit (S1; S2; S3) is a pressure sensor unit.

6. Device according to one of claims 3 to 5, **characterised in that**,
the first and the second sensor unit (S1, S2) are each pressure sensor units, whereas the third sensor unit (S3) is an acceleration sensor unit.

7. Device in accordance with one of the claims 3 to 6,
**characterised in that**
the device features a forth threshold value comparator unit (SWVE32),
which is connected on its input side to the third logic unit (VE3) and which is connected on its output side to the first or the second trigger unit (AE1, AE2),
so that the first or the second trigger unit (AE1, AE2) triggers the occupant protection means associated with it in each case if the signal output of the third logic unit (VE3) is greater than or less than a threshold value of the fourth threshold value comparator unit (SVE4).

8. Device in accordance with one of the claims 3 to 7,
**characterised in that**
the device features a first OR gate (OR1),
- of which the signal inputs are connected to the signal outputs of the first threshold value comparator unit (SWVE1) and the third threshold value comparator unit (SWVE3) and
- of which the signal output is connected to the first trigger unit (AE1).

9. Device in accordance with one of the claims 3 to 8,
**characterised in that**
the device features a second OR gate (OR2),
- of which the signal inputs are connected to the signal outputs of the second threshold value comparator unit (SWVE2) and the fourth threshold value comparator unit (SWVE4) and
- of which the signal output is connected to the second trigger unit (AE2).

## Revendications

1. Dispositif pour le déclenchement d'un moyen de protection des occupants dans un véhicule automobile comprenant
- une unité de commande centrale (ECU) qui présente une unité de capteur centrale (SZ), et
- au moins une unité de capteur (S1 ; S2 ; S3) qui transmet des données brutes, dont le signal est utilisé pour une comparaison avec une valeur de seuil correspondante, le résultat de cette comparaison servant de critère de déclenchement pour le déclenchement du moyen de protection des occupants,
dans lequel, pour chaque unité de capteur transmettant des données brutes (S1 ; S2 ; S3)
- l'unité de commande centrale (ECU) présente une unité de combinaison (VE1 ; VE2 ; VE3) et une unité de comparateur de valeurs de seuil (SWVE1 ; SWVE2 ; SWVE3 ; SWVE32)
- le signal de l'unité de capteur centrale (SZ) est transmis à une première entrée de signal de l'unité de combinaison (VE1 ; VE2 ; VE3),
- le signal de l'unité de capteur (S1 ; S2 ; S3) est transmis à une deuxième entrée de signal de l'unité de combinaison (VE1 ; VE2 ; VE3),
- la sortie de signal de l'unité de combinaison (VE1 ; VE2 ; VE3) est reliée à l'unité de comparateur de valeurs de seuil (SWVE1 : SWVE2 ; SWVE3, SWVE32) et
- la sortie de signal de l'unité de comparateur de valeurs de seuil (SWVE1 : SWVE2 ; SWVE3, SWVE32) est reliée à l'unité de déclenchement (AE1 ; AE2) du moyen de protection des occupants associé à l'unité de capteur respective (S1 ; S2 ; S3),
de sorte que l'unité de déclenchement (AE1 ; AE2) déclenche le moyen de protection des occupants qui y est relié lorsque la sortie de signal de l'unité de combinaison (VE1 ; VE2 ; VE3) est plus grande ou plus petite qu'une valeur de seuil de l'unité de comparateur de valeurs de seuil (SWVE1 : SWVE2 ; SWVE3, SWVE32) qui y est associée,
le dispositif présentant, pour chaque unité de comparateur de valeurs de seuil (SWVE1 : SWVE2 ; SWVE3, SWVE32) une porte ET (AND1 ; AND2 ; AND3, AND32) et au moins une unité de sauvegarde (SFE1 ; SFE2 ; SFE3, SFE32), et la porte ET
- étant reliée directement, côté entrée, par une ligne, à la sortie de signal de l'unité de comparateur de valeurs de seuil (SWVE1 : SWVE2 ; SWVE3, SWVE32),
- étant en outre reliée, côté entrée, au moins à l'unité de sauvegarde (SFE1 ; SFE2 ; SFE3 ; SFE32) et
- la porte ET étant reliée, côté sortie, indirectement ou directement, à l'unité de déclenchement (AE1 ; AE2) et qui y est respectivement associée,
de sorte qu'un déclenchement d'un moyen de protection des occupants par l'unité de déclenchement associée (AE1 ; AE2) ne peut avoir lieu que lorsque la sortie de signal de l'unité de combinaison associée (VE1 ; VE2 ; VE3) est plus grande ou plus petite qu'une valeur de seuil de l'unité de comparateur de valeurs de seuil associée (SWVE1 : SWVE2 ; SWVE3, SWVE32) et qu'un autre signal de l'unité de sauvegarde (SFE1 ; SFE2 ; SFE3 ; SFE32) est présent simultanément.

2. Dispositif selon la revendication 1, **caractérisé en ce que**
l'unité de capteur centrale (SZ) est une unité de capteur d'accélération (SZ) possédant une sensibilité de détection perpendiculairement à la direction de la marche du véhicule automobile.

3. Dispositif selon la revendication 1 ou 2, **caractérisée en ce que**
le dispositif présente au moins trois unités de capteur et, plus précisément,
- une première unité de capteur (S1) qui est reliée à une première unité de combinaison (VE1), à une première unité de comparateur de valeurs de seuil (SWV1) et à une première unité de déclenchement (AE1),
- une deuxième unité de capteur (S1) qui est reliée à une deuxième unité de combinaison (VE2), à une deuxième unité de comparateur de valeurs de seuil (SWV2) et à une deuxième unité de déclenchement (AE1) et
- une troisième unité de capteur (S1) qui est reliée à une troisième unité de combinaison (VE3), à une troisième unité de comparateur de valeurs de seuil (SWV3), à la première unité de déclenchement (AE1) et/ou à la deuxième unité de déclenchement (AE2)

4. Dispositif selon une des revendications 1 à 3, **caractérisé en ce qu'**
au moins une unité de capteur (S1 ; S2 ; S3) est une unité de capteur d'accélération possédant une sensibilité de détection perpendiculairement à la direction de la marche du véhicule automobile.

5. Dispositif selon une des revendications 1 à 4,
**caractérisé en ce qu'** au moins une unité de capteur (S1 ; S2 ; S3) est une unité de capteur de pression.

6. Dispositif selon les revendications 3 à 5, **caractérisé en ce que**
les première et deuxième unités de capteur (S1, S2) sont des unités de capteur de pression, tandis que la troisième unité de capteur (S3) est en revanche une unité de capteur d'accélération.

7. Dispositif selon une des revendications 3 à 6, **caractérisé en ce que**
le dispositif présente une quatrième unité de comparateur de valeurs de seuil (SWVE32),
qui est reliée, côté entré, à la troisième unité de combinaison (VE3) et qui, côté sortie,
est reliée à la première ou à la deuxième unité de déclenchement (AE1, AE2),
de sorte que la première ou la deuxième unité de déclenchement (AE1, AE2) déclenche le moyen de protection des occupants qui y est relié respectivement lorsque la sortie de signal de la troisième unité de combinaison (VE3) est plus grande ou plus petite qu'une valeur de seuil de la quatrième unité de comparateur de valeurs de seuil (SVE4)

8. Dispositif selon une des revendications 3 à 7,
**caractérisé en ce que**
le dispositif présente une première porte OU (OR1)
- dont les entrées de signal sont reliées aux sorties de signal de la première unité de comparateur de valeurs de seuil (SWVE1) et de la troisième unité de comparateur de valeurs de seuil (SWVE3) et
- dont la sortie de signal est reliée à la première unité de déclenchement (AE1).

9. Dispositif selon une des revendications 3 à 8, **caractérisé en ce que**
le dispositif présente une deuxième porte OU (OR2),
- dont les entrées de signal sont reliées aux sorties de signal de la deuxième unité de comparateur de valeurs de seuil (SWVE2) et de la quatrième unité de comparateur de valeurs de seuil (SWVE4) et
- dont la sortie de signal est reliée à la deuxième unité de déclenchement (AE2).
